# EUROPÄISCHE PATENTSCHRIFT

(11) **EP 2 944 176 B1**
(45) Veröffentlichungstag und Bekanntmachung des Hinweises auf die Patenterteilung: **04.01.2017**
(21) Anmeldenummer: 14195358.8
(22) Anmeldetag: 28.11.2014
(51) Int. Cl.: A01C 5/06

(54) **Waldsägerät zur Aussaat schwerfrüchtiger Laubbaumarten**
Forest sowing device for sowing deciduous trees with heavy fruit
Semoir forestier pour le semis de feuillus à fruits lourds

(30) Priorität: 14.05.2014 DE 102014106811
(43) Veröffentlichungstag der Anmeldung: 18.11.2015
(73) Patentinhaber: Schmidt, Robert, 09627 Bobritzsch (OT Sohra) (DE)
(72) Erfinder: Schmidt, Robert, 09627 Bobritzsch (OT Sohra) (DE)
(74) Vertreter: Hauck Patentanwaltspartnerschaft mbB

(56) Entgegenhaltungen:
- DE-A1- 19 703 477
- FR-A- 1 480 643
- FR-A1- 2 413 864
- US-A- 634 239
- Kuratorium für Waldarbeit und Forsttechnik e.V.: "Exkursionen: Streifenweise Bodenvorbereitung zum Waldumbau unter Schirm; Bucheckern-Voraussaat", , 30. Mai 2011 (2011-05-30), XP055214167, Gefunden im Internet: URL:http://2000.kwf-tagung.org/exkursion/b rd/1waldumbau/1-2-2.htm [gefunden am 2015-09-17]

## Beschreibung

Die Erfindung betrifft ein Waldsägerät zur Aussaat schwerfrüchtiger Laubbaumarten.

Folgende interne Überlegungen liegen der Erfindung zugrunde:

### Anliegen der Entwicklung

Mit dem Waldsägerät soll die mechanisierte Saat der schwerfrüchtigen Laubbaumarten Stiel-Eiche, Trauben-Eiche, Rot-Eiche, Rot-Buche, Kastanie und Nußbaum unter naturnahen Bedingungen ermöglicht werden. Dabei ist das Waldbodengefüge weitgehend zu schonen. Bodenverdichtungen und Beschädigungen am noch stockenden Bestand sind zu vermeiden. Die Saaten sollen unter verschiedensten Schirmbeständen, aber auch auf Freiflächen, auf den vielfältigsten Waldstandorten mit unterschiedlichster Bodenvegetation ausführbar sein.

Leitbild des Verjüngungsvorganges ist die natürliche Verjüngung der oben genannten Arten im Walde. Dabei muss bei der Kunstsaat die Spezifik der schwerfrüchtigen, sehr fetthaltigen und nur bedingt lagerfähigen Früchte besonders beachtet werden. Mit dem Gerät soll ein separater Modul für eine Ökotechnologie zur mechanisierten Saat dieser Baumarten geschaffen werden.

Ziel der Waldsaaten ist der ökologisch und ökonomisch vorteilhafte Aufbau leistungsstarker, standortgerechter, stabiler multifunktionaler Mischbestände. Dafür muss das Gerät geländegängig und robust sein. Um den Waldboden zu schonen sollte es leicht sein und mit geringem Energieaufwand betrieben werden. Einfache Konstruktion, Verschleißfreiheit und geringe Störanfälligkeit sollen einen kostengünstigen Betrieb möglich machen.

### Arbeitsanforderungen an das Gerät

### Spezifik der schwerfrüchtigen Samen

Schwerfrüchtige Samen sind von Natur aus nur über einen Winter lagerbar. Mit entsprechenden Methoden können Bucheckern gegenwärtig bis 4 Jahre eingelagert werden. Eicheln dagegen müssen bis zum kommenden Frühjahr ausgesät sein. Nach längerer Einlagerung mit Rücktrocknung und Tiefkühlung gelingen Buchensaaten nur nach aufwändiger Samenvorbehandlung. Das heißt, in allen Fällen kommt bei der Frühjahrssaat weit keimbereites und sehr austrocknungsempfindliches Saatgut zum Einsatz. Aus dieser Sicht wäre natürlich die Sofortaussaat im Herbst am zweckmäßigsten. Dem stehen aber die hohen Risiken durch Fraßfeinde (Schwarzwild, Mäuse, Vögel) und Pilze sowie oft der Mangel an frischem Saatgut entgegen. Unter günstigen Verhältnissen und gutem Samenangebot (Mastjahr) sind Herbstsaaten aber durchaus angebracht. Das Gerät soll darum für beide Aussaatsituationen geeignet sein.

Bei der Frühjahrssaat wird in der Regel mit vorgekeimtem Saatgut gearbeitet. Die genannten Baumarten gehören allesamt zu den sogenannten Dikothyledonen (Zweikeimblättrige). Sie unterscheiden sich aber je nach Gattung in der Keimentwicklung.

Die Eichen-Arten keimen hypogäisch (unterirdisch), d.h. die Keimblätter verbleiben im Erdreich, das Epikotyl streckt sich bis an die Erdoberfläche und bildet dort sofort die ersten Laubblätter.

Die Buche dagegen keimt epigäisch (oberirdisch), d.h. die Keimblätter erscheinen an der Oberfläche und tragen z.T. noch die Fruchthüllen. Nach dem Abstreifen der Testa bildet sich aus dem Hypokotyl ein neuer Trieb, der dann die Primärblätter ausbildet.

In beiden Fällen ist charakteristisch, dass für die Keimung der Samen eine innige Verbindung mit dem Boden hergestellt sein muss. Bereits vor Erscheinen der oberirdischen Pflanzenteile bildet sich eine starke Keimwurzel aus, die sich rasch in eine kräftige Pfahlwurzel auswächst. Unter günstigen Wuchsbedingungen sind die Keimlinge beider Gattungen noch zu einem zweiten Höhentrieb, dem sog. "Johannistrieb" in der Lage. Dadurch können von den 1- jährigen Sämlingen schon Wuchshöhen von 10- 20 cm erreicht werden. Dies verschafft den Sämlingen gegenüber der Begleitvegetation erhebliche Vorteile.

### Spezifik des Sävorganges bei den schwerfrüchtigen Samen

Die schwerfrüchtigen Samen müssen zum Schutze vor Austrocknung aber auch vor der Aufnahme durch Fraßfeinde in das Erdreich eingebracht werden. Dies erfordert einen so breiten Spalt im Boden, dass die Samen bis in die gewünschte Tiefe gelangen können. Die erforderliche Tiefe ist abhängig von der Samengröße und der Bodenart. Bei zu tiefer Saat erreicht der Keimling trotz guter Keimung die Bodenoberfläche nicht. Darum muss eine sehr genaue Tiefeneinstellung für die Saatrille möglich sein. Nach dem Einbringen der Samen muss die Rille sofort wieder verschlossen werden.

Die Keimlinge und Sämlinge o.g. Baumarten wachsen rascher und sind robuster als die der Nadelbaumarten. Aus diesem Grunde ist die Gefährdung durch die Bodenvegetation weit geringer. Eine Freiräumung des Saatbettes von Bodenvegetation oder Rohhumus ist hier nicht zwingend erforderlich.

### Aus den Spezifika abzuleitende Arbeitsanforderungen an das Waldsägerät

Das Gerät muss in der Lage sein, auf den unterschiedlichsten Waldböden den für die Saat der schwerfrüchtigen Laubbaumarten erforderlichen Säspalt herzustellen. Dies soll auch noch in bestimmten Florendecken (Beerkraut, Moose, Gräser) möglich sein. Dabei darf der Boden weder durch Befahrung noch Bearbeitung verdichtet werden. Für eine schnelle und vollständige Keimung ist die Erhaltung der Bodenkapillarität wichtige Voraussetzung. Nur so kann sich auf natürliche Weise Feuchtigkeit und Drainage des Bodens regulieren.

Aus den bisherigen Erfahrungen bei der maschinellen Walderneuerung leitet sich die Bevorzugung eines kontinuierlich arbeitenden Verfahrens ab. Ebenso muss die Entscheidung für die Verwendung "rollender Werkzeuge" favorisiert werden. Gegenüber starren Pflugscharen zeichnen sich diese durch geringen Bodenwiderstand und damit weniger Zugkraftbedarf aus. Stockungen im Arbeitsablauf durch Verhaken im Boden sowie übermäßige Materialbeanspruchungen werden vermieden. Die rollenden Werkzeuge gestatten eine flexiblere Linienführung der Saatrillen. An den Grobwurzeln der Bäume treten durch das Überrollen nur geringe Schäden auf. Die Feinwurzeln werden im Gegensatz zum Pflug nicht abgerissen oder zerfasert, sondern glatt abgetrennt, was einen besseren Wundverschluss und die raschere Regeneration der Wurzeltracht bewirkt.

### Stand der Technik

Für den oben definierten Arbeitsvorgang existieren in Deutschland zur Zeit zwei Maschinentypen, die konstruktiv und qualitativ noch nicht voll ausgereift sind. Es handelt sich dabei um die Waldsämaschine "Sämagrub" und die Waldsämaschine "ÖkoSat/U Modell 120-2-B" Beide sind nur von geringer Stückzahl und konstruktiv ca. 15-20 Jahre alt.

### Waldsämaschine "Sämagrub"

Es handelt sich hierbei um ein Anbaugerät, dass zweireihig arbeitet, also auch einen breiten Arbeitsstreifen im Bestand benötigt. Mit zwei federnd gelagerten Vulkulanscharen werden Riefen gezogen, in die das Saatgut über Fallrohre in den Boden gelangt. Die Bewegung der Samen in den Rohren wird durch Druckluft unterstützt. Nach Ablegen der Samen werden mittels Andruckrollen die Riefen wieder verschlossen.

Probleme:
- Arbeitsbreite ca. 2m, Arbeitslinienabstand 8m
- Saattiefe variiert stark
- Samenverteilung sehr ungleichmäßig
- Bodenbedeckung oft nicht gegeben
- Auflaufen der Saat sehr unregelmäßig
- Antrieb durch Traktor erforderlich
- beseitigt wertvollen Oberboden durch Abziehen oder Durchmischen
- zerstört Hindernisse

### Waldsämaschine "ÖkoSat"

Diese Maschine ist wenig störanfällig und arbeitet als Einzelgerät einreihig. Ein sehr waldschonender Einsatz ist mit Pferdezug möglich. Sie besitzt bei geringer Arbeitsbreite wenig Gewicht und hohe Wendigkeit. Dadurch ist sie in ihrem Einsatz sehr flexibel.

Der Säspalt wird durch zwei in der Tiefe regulierbare Scheiben hergestellt und nach dem Ablegen der Samen sofort wieder verschlossen. Die Dosierung der Samenmenge erfolgt mechanisch über die Räder. Das Gerät ist einfach zu betreiben, es hat sich im Einsatz bewährt. Einige Arbeitsschritte wären aber technisch noch zu verbessern:
- die Laufräder verursachen Bodendruck, stoßen an Hindernisse und vergrößern die Arbeitsbreite
- die Bewältigung bestimmter Vegetationstypen (Beerkraut, Gräser) ist nicht immer gegeben
- das Säaggregat ist von handelsüblichen Modellen übernommen worden und nicht auf die speziellen Anforderungen bei großen und angekeimten Samen ausgelegt (Verstopfung)
- der Aufbau und die Bedienung des Gerätes sind ergonomisch nicht optimal gestaltet.

Die aus DE 197 03 477 A1 bekannte Forstsaatkulturmaschine dient der Durchführung von Waldsaaten auf jedem, für eine Waldsaat geeigneten, Boden. Das jeweils vorhandene Zugmittel bewegt die Forstsaatkulturmaschine durchs Gelände und bringt die Saat oder Saatmischung in einem Arbeitsgang in der gewünschten Menge in naturgemäß richtiger Ablage auf oder in den Mineralboden. Sie zeichnet sich durch global universelle Einsetzbarkeit, Robustheit, Wirtschaftlichkeit, Leistungsfähigkeit, Umweltfreundlichkeit, geringe Verschleiß bei niedrigen System- und Maschinenkosten.

### Aufgabe

Davon ausgehend liegt der Erfindung die Aufgabe zugrunde, ein Waldsägerät und ein Verfahren zur Aussaat schwerfrüchtiger Laubbaumarten zu schaffen, das unter verringertem Energieeinsatz, Beschädigung des Waldbodens und Störanfälligkeit die Aussaat schwerfrüchtiger Laubbaumarten unter Schaffung besonders keimungs- und sämlingsfördernden Bedingungen insbesondere in bestehenden Waldbeständen oder Freiflächen ermöglicht.

### Erfindung

Die Aufgabe wird durch ein Waldsägerät mit den Merkmalen von Anspruch 1 gelöst. Vorteilhafte Ausgestaltungen des Waldsägeräts sind in Unteransprüchen angegeben.

Das erfindungsgemäße Waldsägerät zur Aussaat schwerfrüchtiger Laubbaumarten hat
- einen Geräteträger,
- erste Drehlagerelemente am Geräteträger auf beiden Seiten einer Gerätelängsachse,
- zwei am Umfang gezahnte Scheiben, die jeweils ein zentrales zweites Drehlagerelement aufweisen, das an einem der ersten Drehlagerelemente gelagert ist, wobei die beiden Scheiben auf verschiedenen Seiten der Gerätelängsachse angeordnet sind,
- wobei die Drehlagerachsen der ersten Drehlagerelemente jeweils spitzwinklig nach vorn bezüglich einer zur Gerätelängsachse senkrechten Horizontalen geneigt sind und spitzwinklig zur Vertikalen geneigt sind, sodass die beiden Scheiben unterhalb der ersten Drehlagerelemente einander näher sind als oberhalb der ersten Drehlagerelemente,
- wobei der Geräteträger ein zentraler Geräteträger aufweist, der zwischen den Scheiben auf der Längsachse angeordnet ist, und die Drehlagerelemente des Geräteträgers auf beiden Seiten des zentralen Geräteträgers angeordnet sind,
- wobei sich das Gerät nur über die Scheiben am Boden abstützt und
- mindestens eine Dosiervorrichtung für Baumsamen am Geräteträger mit einer Dosieröffnung zwischen den beiden Scheiben.

Das erfindungsgemäße Waldsägerät wird beim Aussäen von Baumsamen auf dem Boden verlagert, wobei die Scheiben auf dem Boden abrollen. Die gezahnten Scheiben haben am Umfang abwechselnd Zähne und zahnfreie Bereiche. Die Scheiben sind aus der Bodenbearbeitung in der Landwirtschaft bekannt und werden auch als "Sechscheiben" bezeichnet. Beim Verlagern des Waldsägeräts graben sich die Scheiben mit ihrem Umfang ein Stück weit in den Boden ein. Aufgrund der Ausrichtung der Drehlagerachsen der Scheiben spitzwinklig zur Horizontalen und zur Vertikalen und der Zähne am Umfang der Scheiben wird hierbei der Auflagehumus durchschnitten und im Oberboden eine Saatrille geschaffen, die bis zum Mineralboden oder in diesen hineinreicht.

Mittels der Dosiervorrichtung werden in die geöffnete Saatrille Baumsamen hineingegeben. Durch eine tiefe Anordnung der Dosiervorrichtung zwischen den beiden Scheiben gelangen die Samen sicher in die Saatrille. Die Anordnung begünstigt eine tiefe Schwerpunktlage, die vorteilhaft für die Stabilisierung des Waldsägeräts in aufrechter Lage ist.

Beim Austreten aus der Saatrille fördern die Zähne gelockertes Material aus dem Auflagehumus in die Saatrille hinein, wodurch der abgelegte Samen bedeckt wird. Hierdurch werden vorteilhafte Bedingungen für Keimung und Sämlingsentwicklung geschaffen.

Das Waldsägerät kann mit geringem Energieaufwand betrieben werden, da die Scheiben rollende Werkzeuge sind. Das Waldsägerät ist auf den Scheiben leicht in Richtung der Gerätelängsachse verfahrbar. Ferner kann es leicht entlang von Kurven gefahren oder sogar auf der Stelle gedreht werden, da die Scheiben mit unterschiedlichen Drehzahlen oder gegenläufig drehen können. Vorzugsweise wird das Waldsägerät gezogen. Zum Ziehen des Waldsägeräts kann ein Arbeitspferd oder ein Traktor eingesetzt werden. Das Waldsägerät ist sehr wendig und kann infolgedessen insbesondere in bestehenden Baumbeständen und schwer zugänglichen Lagen verwendet werden.

Erfindungsgemäß stützt sich das Waldsägerät nur über die Scheiben am Boden ab.

Das Ausmaß des Eindringens der Scheiben in den Waldboden kann durch das Gewicht des Waldsägeräts gesteuert werden. Für bevorzugte Eindringtiefen von wenigen Zentimetern reicht ein im Vergleich zum Stand der Technik geringes Eigengewicht des Waldsägeräts aus (ca. 150 kg statt 500 kg). Die Beschädigung des Waldbodens beim Einsatz des Waldsägeräts ist nur gering, insbesondere wenn es von einem Arbeitspferd gezogen wird. Dies beruht insbesondere darauf, dass es sich ausschließlich oder vornehmlich über die Scheiben am Boden abstützt, nur ein geringes Eigengewicht aufweist und mit geringem Energieaufwand bewegt werden kann, der durch ein Pferd erbracht werden kann. Zudem ist das Waldsägerät durch die rollenden Werkzeuge besondes einfach und robust. Von Vorteil für die robuste Ausführung ist auch die geschützte Anordnung der Dosiervorrichtung zwischen den beiden Scheiben.

Weiterhin vorteilhaft ist, dass die Zähne der Scheiben eine Folge von Taschen erzeugen. In die Taschen, die bis zum Mineralboden oder in diesen hineinreichen, wird der Baumsamen hineingegeben. Zwischen den Taschen ist die Saatrille nur teilweise oder gar nicht ausgebildet. Durch das Einarbeiten von Taschen ist der Energieaufwand, das erforderliche Gewicht des Waldsägeräts für das Herstellen der Saatrille sowie die Beschädigung des Waldbodens weiter reduziert.

Das Waldsägerät ist insbesondere für das Aussäen schwerfrüchtiger Laubbaumarten in Fichten- und anderen Nadelholzbeständen oder Freiflächen geeignet. Besonders geeignet ist das Waldsägerät für Waldböden, die auf einer gewachsenen Mineralbodenschicht einen Oberboden mit einer Stärke von 2 cm bis 10 cm mit einer Krautschicht an der Oberseite aufweisend. Das Entstehen optimaler Bodenbedingungen kann gesteuert werden, indem für einen hinreichenden Zutritt von Licht und Wasser Sorge getragen wird.

Ein weiterer Vorteil ist, dass sich die Drehungen der beiden Scheiben selbsttätig so synchronisieren können, dass abwechselnd ein Zahn der einen Scheibe und ein Zahn der anderen Scheibe in den Boden eindringen. Diese selbsttätige Synchronisierung wurde beim Probebetrieb beobachtet. Sie beruht anscheinend darauf, dass die beim Eindringen in den Boden auf einen Zahn der einen Scheibe wirkenden Kräfte ein Kippmoment erzeugen, welches einen zahnfreien Bereich der anderen Scheibe gegen den Boden drückt und der Zahn nach dem Eindringen in den Boden die eine Scheibe bremst, sodass die andere Scheibe verstärkt abrollt und mit dem nachfolgenden Zahn in den Boden eindringt.

Vorzugsweise wird das Waldsägerät für die Aussaat schwerfrüchtiger Laubbaumarten verwendet, insbesondere der Stiel-Eiche, Trauben-Eiche, Rot-Eiche, Rot-Buche, Kastanie und Nußbaum. Grundsätzlich ist das Waldsägerät aber auch für die Aussaat leichtfrüchtiger Laubbaumarten verwendbar. Ferner kann das Waldsägerät dazu verwendet werden, Mischungen verschiedener schwerfrüchtiger Laubbaumarten, verschiedener leichtfrüchtiger und schwerfrüchtiger und leichtfrüchtiger Laubbaumarten auszusäen. Die verschiedenen Sorten Baumsamen können mittels verschiedener Dosiervorrichtungen oder mittels derselben Dosiervorrichtung dosiert werden.

Gemäß einer Ausgestaltung weist der Geräteträger einen zentral zwischen den Scheiben hindurch verlaufenden zentralen Geräteträger auf. Der Geräteträger kann allein durch den zentralen Geräteträger gebildet sein oder zusätzliche Bauteile aufweisen. Der zentrale Geräteträger kann das alleinige oder das wesentliche tragende Strukturelement des Geräteträgers sein. Hierdurch kann ein Waldsägerät mit besonders geringem Gewicht geschaffen werden. Vorzugsweise ist der zentrale Geräteträger ein Vierkantprofil. Vorzugsweise ist der zentrale Geräteträger auf der Gerätelängsachse angeordnet.

Gemäß einer weiteren Ausgestaltung weist der Geräteträger vorn an der Unterseite eine Anschrägung auf, sodass im Bereich der Anschrägung der Abstand seiner Unterkante vom Boden nach vorn zunimmt und/oder weist der Geräteträger vorn eine Abwinklung nach oben auf, sodass im Bereich der Abwinklung der Abstand seiner Unterkante vom Boden nach vorn zunimmt. Durch diese Ausgestaltung wird ein Geräteträger mit der Form eines Schiffsbuges geschaffen. Dies hat den Vorteil, dass das Waldsägerät Steinen, Baumstämmen oder anderen Hindernissen besser ausweichen kann, da es durch die Anschrägung angehoben wird, sodass die Scheiben aus dem Boden austreten und über das Hindernis abrollen. Beschädigungen werden hierdurch besser vermieden.

Gemäß einer besonders einfachen und robusten Ausführung sind die ersten Drehlagerelemente mit dem Geräteträger verbundene Lagerbuchsen und die zweiten Drehlagerelemente mit den Scheiben verbundene Lagerwellen. Alternativ sind die ersten Drehlagerelemente mit dem Geräteträger verbundene Lagerachsen und die zweiten Drehlagerelemente mit den Scheiben verbundene Lagerbuchsen.

Die Scheiben sind bevorzugt flache Scheiben. Grundsätzlich ist es aber auch möglich, gewölbte oder konische Scheiben zu verwenden.

Gemäß einer weiteren Ausgestaltung sind die Scheiben am Umfang geschliffen. Gemäß einer bevorzugten Ausgestaltung sind die Scheiben auf einer oder beiden Seiten der Kronen der Zähne geschliffen. Gemäß einer weiteren bevorzugten Ausgestaltung sind die Zähne auf einer oder beiden Seiten jeder Flanke geschliffen. Gemäß einer weiteren Ausgestaltung sind die Scheiben am Umfang auch auf einer oder beiden Seiten ihrer zahnfreien Bereiche geschliffen. Durch das Schleifen der Scheiben kann das Eindringen der Scheiben in den Waldboden verbessert und der Energieaufwand für den Betrieb des Waldsägeräts verringert werden.

Die nachfolgenden Ausgestaltungen der Scheiben sind besonders vorteilhaft für das Erzeugen einer Saatrille unter geringem Energieaufwand mit vorteilhaften Eigenschaften für die Keimung und Entwicklung der Sämlinge:
Gemäß einer Ausgestaltung beträgt der spitze Winkel zwischen jeder Drehlagerachse und der Horizontalen 5° bis 40°, vorzugsweise 10° bis 20°, weiterhin vorzugsweise etwa 15° und/oder beträgt der spitze Winkel zwischen jeder Drehlagerachse und der Vertikalen 10° bis 50°, vorzugsweise 20° bis 30°, weiterhin vorzugsweise etwa 24°. Diese Angaben gelten für flache Scheiben. Bei gewölbten oder konischen Scheiben sind die Winkel der Drehlagerachsen vorzugsweise so gewählt, dass die in den Waldboden eindringenden Umfangsbereiche der Scheiben etwa dieselben Ausrichtungen wie die flachen Scheiben zueinander haben.

Gemäß einer weiteren Ausgestaltung haben die Aufstandspunkte der beiden Scheiben auf dem Boden einen Abstand von 2 cm bis 10 cm voneinander, vorzugsweise von 4 cm bis 7 cm, weiterhin vorzugsweise von etwa 5 cm. Mit den Aufstandspunkten der Scheiben auf dem Boden sind Punkte am Umfang der Scheiben bezeichnet, die vor dem Eindringen der Scheiben in den Boden auf der Bodenoberfläche aufsitzen.

Gemäß einer weiteren Ausgestaltung weisen die Scheiben jeweils einen Durchmesser von 30 cm bis 80 cm, vorzugsweise von 40 cm bis 65 cm, weiterhin vorzugsweise von etwa 50 cm auf. Vorzugsweise haben beide Scheiben denselben Durchmesser.

Gemäß einer weiteren Ausgestaltung sind die beiden Scheiben an einer Stelle des Umfanges einander am nächsten angeordnet, die 4 cm bis 20 cm, vorzugsweise 5 cm bis 10 cm, weiterhin vorzugsweise etwa 7 cm über der Aufstandsebene der Scheiben auf dem Boden angeordnet sind. Mit der Aufstandsebene der Scheiben auf dem Boden ist eine ebene Bodenoberfläche bezeichnet, auf der die Scheiben mit ihrem Umfang aufsitzen, bevor sie in den Boden eindringen.

Gemäß einer weiteren Ausgestaltung weisen die Scheiben am Umfang Zähne mit jeweils einem trapezförmigen Profil in der Ebene der Scheibe auf. Gemäß einer weiteren Ausgestaltung weisen die Scheiben am Umfang zwischen jeweils zwei benachbarten Zähnen eine Ausrundung auf.

Gemäß einer weiteren Ausgestaltung haben die Scheiben am Umfang Zähne mit jeweils einer Breite der Zahnkrone von 2 cm bis 8 cm, vorzugsweise von 4 cm bis 6 cm, weiterhin vorzugsweise von 5 cm und einer Breite an der Basis von 4 cm bis 8 cm, vorzugsweise von 6 cm bis 8 cm, weiterhin vorzugsweise von etwa 7 cm. Gemäß einer weiteren Ausgestaltung haben die zahnfreien Bereiche eine Breite von 0,25 bis 4 cm, vorzugsweise von 0,5 cm bis 2 cm, weiterhin vorzugsweise von 1 cm. Die Breite der Zahnkrone, die Breite an der Basis und die Breite des zahnfreien Bereiches ist jeweils die Breite in Umfangsrichtung der Scheibe.

Gemäß einer weiteren Ausgestaltung beträgt der Abstand benachbarter Zähne 5 cm bis 15 cm, vorzugsweise 7,5cm bis 12,5 cm, weiterhin vorzugsweise etwa 10 cm. Dem Abstand der Zähne entspricht der Abstand benachbarter zahnfreier Bereiche. Gemäß einer weiteren Ausgestaltung haben die Scheiben am Umfang Zähne mit einer Höhe von 1 cm bis 6 cm, vorzugsweise von 2 cm bis 4 cm, weiterhin vorzugsweise von 3 cm.

Gemäß einer weiteren Ausgestaltung ist vorne am Geräteträger mindestens eine Vorrichtung zum Ankuppeln einer Zugkraftquelle vorhanden. Bei der Vorrichtung zum Ankuppeln handelt es sich beispielsweise um eine Vorrichtung, die zum Ankuppeln eines Pferdes oder eines Traktors geeignet ist. Gemäß einer weiteren Ausgestaltung weist die Vorrichtung zum Ankuppeln mindestens eine fest mit dem Geräteträger verbundene Öse auf.

Gemäß einer weiteren Ausgestaltung ist die Dosiervorrichtung ganz oder teilweise in einem Bauraum zwischen den beiden Scheiben angeordnet. Hierdurch ist die Dosiervorrichtung geschützt untergebracht. Zudem begünstigt dies eine tiefe Schwerpunktlage, die vorteilhaft für die Stabilisierung des Waldsägeräts in aufrechter Lage ist.

Gemäß einer weiteren Ausgestaltung umfasst die Dosiervorrichtung mindestens eine Zellenradschleuse, die ein Zellenrad in einem Dosiergehäuse aufweist und deren Zellenrad mit Antriebsmitteln verbunden ist, die in der Lage sind, das Zellenrad im Dosiergehäuse zu drehen. Mittels der Zellenradschleuse ist eine genaue Einstellung der aus der Dosieröffnung angegebenen Samenmengen möglich. Das Zellenrad ist beispielsweise ein Zahnrad oder ein mit Besen am Umfang versehenes Rad. Vorzugsweise ist das Zellenrad auswechselbar, um eine Anpassung an verschiedene Arten Baumsamen vorzunehmen.

Gemäß einer weiteren Ausgestaltung sind die Antriebsmittel ein Getriebe, das eine Drehbewegung einer Scheibe auf eine Drehbewegung des Zellenrads überträgt. Hierbei wird die Fortbewegung des Waldsägeräts für den Antrieb der Dosiervorrichtung genutzt. Die Ausbringungsmenge der Baumsamen steigt und fällt mit der Geschwindigkeit der Fortbewegung des Waldsägeräts. Hierdurch wird eine gleichmäßige Abgabe von Baumsamen in die Saatrille bei unterschiedlichen Geschwindigkeiten des Waldsägeräts erreicht.

Gemäß einer weiteren Ausgestaltung ist das Getriebe ein Zahnradgetriebe. Gemäß einer weiteren Ausgestaltung sind die Drehachsen der Zahnräder des Zahnradgetriebes parallel zur Drehlagerachse der Scheibe ausgerichtet, mit der das Zahnradgetriebe gekoppelt ist. Um die Übertragung der Drehbewegung auf die Dosiervorrichtung zu erleichtern, ist vorzugsweise auch die Drehachse des Zellenrads parallel zur Drehlagerachse der Scheibe ausgerichtet. Der Einlauf der Dosiervorrichtung ist an den Auslauf eines vertikal ausgerichteten Vorratsbehälters angepasst oder über eine flexible Leitung mit diesem verbunden.

Gemäß einer weiteren Ausgestaltung weist das Waldsägerät zwei Dosiervorrichtungen auf, die auf verschiedenen Seiten der Gerätelängsachse angeordnet und jeweils über ein Getriebe mit einer der Scheiben verbunden sind. Die Dosiervorrichtungen begünstigen die gleichzeitige Ausbringung verschiedener Sorten Baumsamen. Ferner ist durch zwei Dosiervorrichtungen eine Reserve gegeben, die eine Ausbringung von Baumsamen auch dann gewährleisten kann, wenn eine Dosiervorrichtung keinen Samen abgibt.

Gemäß einer weiteren Ausgestaltung ist am Geräteträger ein Adapter zum lösbaren Halten mindestens eine Dosiervorrichtung angeordnet und die Dosiervorrichtung mit einem komplementären Adapterblock an dem Adapter lösbar gehalten. Der Adapter ermöglicht ein einfaches Auswechseln der Dosiervorrichtung z.B. zum Austausch gegen eine Dosiervorrichtung für eine andere Art Baumsamen oder zum Reinigen der Dosiervorrichtung.

Gemäß einer weiteren Ausgestaltung weist die Dosiervorrichtung Mittel zum Einstellen der Dosiermenge auf. Die Mittel zum Einstellen ermöglichen eine Anpassung der Dosiermenge z.B. an die Art Baumsamen oder die Beschaffenheit des Bodens oder an den vorhandenen Pflanzenbestand. Gemäß einer Ausgestaltung umfassen die Mittel zum Einstellen einen Dosierspalt in der Dosiervorrichtung und einen einstellbaren Mengenschieber, der je nach Einstellung den Dosierspalt mehr oder weniger verschließt. Vorzugsweise sind der Dosierspalt und der Mengenschieber bei einer Dosiervorrichtung mit Zellenradschleuse zwischen dem Einlauf der Dosiervorrichtung und dem Zellenrad angeordnet.

Gemäß einer weiteren Ausgestaltung ist am Geräteträger ein Vorratsbehälter für Baumsamen angeordnet, der unten einen Auslauf hat, der mit einem Einlauf der Dosiervorrichtung verbunden ist. Alternativ ist ein Vorratsbehälter an der Zugkraftquelle angeordnet, beispielsweise auf dem Rücken eines Pferds oder einem Traktor gehalten. In diesem Falle ist der Auslauf des Vorratsbehälters über einen Schlauch oder eine andere flexible Leitung mit der Dosiervorrichtung auf dem Waldsägerät verbunden.

Vorzugsweise ist der Vorratsbehälter zumindest teilweise zwischen den Scheiben angeordnet und damit geschützt untergebracht. Hierdurch wird eine tiefe Schwerpunktlage begünstigt, die vorteilhaft für die Stabilisierung des Waldsägeräts in aufrechter Lage ist.

Gemäß einer weiteren Ausgestaltung erweitert sich der Vorratsbehälter nach oben. Dies ist vorteilhaft für die Befüllung des Vorratsbehälters mit Baumsamen und seine Entleerung durch den Auslauf in die Dosiervorrichtung.

Gemäß einer weiteren Ausgestaltung weist das Waldsägerät Steuermittel am Geräteträger zum Manipulieren des Geräts im Gelände auf. Mittels des Steuermittels ist beispielsweise die Fahrtrichtung des Geräts im Gelände und seine Ausrichtung zur Vertikalen steuerbar. Gemäß einer Ausgestaltung weist das Steuermittel einen am Geräteträger fixierten Griff und/oder einen am Geräteträger fixierten Handlauf auf.

Gemäß einer weiteren Ausgestaltung weist der Geräteträger einen Schutzrahmen auf, der zwei außerhalb der Scheiben verlaufende seitliche Geräteträger hat. Der Schutzrahmen schützt die innerhalb des Schutzrahmens angeordneten Bauteile des Waldsägeräts vor Beschädigung von außen. Insbesondere kann er die Scheiben, das Dosiergerät und einen Vorratsbehälter schützen. Vorzugsweise weist der Geräteträger auf der Gerätelängsachse einen zentralen Geräteträger und beidseits davon seitliche Geräteträger auf, die vorn und hinten mit dem zentralen Geräteträger verbunden sind. Die seitlichen Geräteträger können vorn und/oder hinten gekrümmt und direkt mit dem zentralen Geräteträger verbunden sein. Gemäß einer weiteren Ausgestaltung sind die seitlichen Geräteträger vorn über vordere Geräteträger miteinander und/oder mit dem zentralen Geräteträger verbunden. Gemäß einer weiteren Ausgestaltung sind die seitlichen Geräteträger hinten über hintere Geräteträger miteinander und/oder mit dem zentralen Geräteträger verbunden. Ferner umfasst die Erfindung Ausgestaltungen, bei denen der Geräteträger lediglich seitliche Geräteträger und keinen zentralen Geräteträger aufweist und die Scheiben an den seitlichen Geräteträgern gelagert sind. Dabei kann die Gerätelängsachse eine Symmetrieachse sein, die in der Mitte zwischen den beiden seitlichen Geräteträgern verläuft.

Gemäß einer weiteren Ausgestaltung weist der Geräteträger Mittel zum Halten mindestens eines Zusatzgewichtes auf. Die Mittel zum Halten mindestens eines Zusatzgewichts ermöglichen eine Anpassung des Gerätegewichtes an die jeweilige Bodenbeschaffenheit, sodass die optimale Eindringtiefe der Scheiben in den Boden erreicht wird. Die Mittel zum Halten sind beispielsweise ein Teller mit einem vorstehenden Zapfen, auf den eine wählbare Anzahl scheibenförmiger Gewichte mit einem zentralen Loch auffädelbar ist.

Gemäß einer bevorzugten Ausgestaltung weist das Waldsägerät nur eine einzige Anordnung mit zwei gezahnten Scheiben auf. Gemäß einer alternativen Ausgestaltung weist das Waldsägerät mehrere Anordnungen mit je zwei gezahnten Scheiben auf. Jeder Anordnung mit je zwei gezahnten Scheiben ist eine Gerätelängsachse zugeordnet. Bevorzugt sind die mehreren Gerätelängsachsen des Waldsägeräts parallel zueinander ausgerichtet. Mehrere Anordnungen mit je zwei gezahnten Scheiben können beispielsweise so angeordnet sein, dass die Aufstandspunkte auf dem Boden auf einer gemeinsamen Achse liegen. Ferner können die durch die Aufstandspunkte gehenden Achsen verschiedener Anordnungen zueinander versetzt sein. Beispielsweise können die Anordnungen auf den Ecken eines Dreiecks angeordnet sein, wobei die Aufstandspunkte von zwei Anordnungen auf derselben Achse liegen und die Aufstandspunkte einer weiteren Anordnung in der Mitte der beiden Anordnungen in Fahrtrichtung weiter vorn angeordnet sind. Bei der versetzten Anordnung der Achsen durch die Aufstandspunkte sind vorzugsweise die Gerätelängsachsen der verschiedenen Anordnungen mit je zwei gezahnten Scheiben parallel zueinander ausgerichtet. Gemäß einer anderen Ausgestaltung ist die Gerätelängsachse mindestens einer Anordnung mit zwei gezahnten Scheiben um eine vertikale Achse schwenkbar, um die Fahrtrichtung des Waldsägeräts durch Schwenken mindestens einer Anordnung mit je zwei gezahnten Scheiben zu steuern. Ein Waldsägerät mit mehreren Anordnungen kann ohne weitere Maßnahmen stabil in aufrechter Lage verfahren werden und ist besonders für die Aussaat auf größeren Flächen geeignet.

Gemäß einer bevorzugten Ausgestaltung weisen die mehreren Anordnungen mit je zwei gezahnten Scheiben einen gemeinsamen Geräteträger auf. Alternativ haben die mehreren Anordnungen mit je zwei gezahnten Scheiben verschiedene Geräteträger. Die verschiedenen Geräteträger sind gemäß einer weiteren Ausgestaltung durch Verbindungsmittel (z.B. Kupplungsmittel oder Zugmittel) miteinander verbunden, sodass sie gemeinsam nebeneinander bzw. hintereinander verfahrbar sind. Ein Waldsägerät mit mehreren Anordnungen mit je zwei gezahnten Scheiben hat gemäß einer Ausgestaltung eine einzige Dosiervorrichtung, aus der Baumsamen in sämtliche Anordnungen mit je zwei gezahnten Scheiben dosiert werden. Alternativ hat das Waldsägerät mehrere Dosiervorrichtungen. Vorzugsweise ist jeder Anordnung mit je zwei gezahnten Scheiben mindestens eine Dosiervorrichtung zugeordnet, wobei die Dosieröffnung der jeweiligen Dosiervorrichtung zwischen den beiden Scheiben angeordnet ist. Die mehreren Dosiervorrichtungen können auch dazu verwendet werden, gleichzeitig verschiedene Sorten Baumsamen auszusäen.

Ferner wird die Aufgabe durch ein Verfahren mit den Merkmalen von Anspruch 21 gelöst. Vorteilhafte Ausgestaltungen des Verfahrens sind in Unteransprüchen angegeben.

Bei dem erfindungsgemäßen Verfahren zum Aussähen schwerfrüchtiger Laubbaumarten

- wird durch Einschneiden in den Auflagehumus und Öffnen des Oberbodens im Oberboden eine bis zur Mineralbodenschicht reichende Saatrille gebildet,
- werden in die Saatrille Baumsamen schwerfrüchtiger Laubbaumarten hineingegeben und
- werden die Baumsamen in der Saatrille mit gelockertem Material aus dem Auflagehumus abgedeckt,
- nach dem Abdecken der Baumsamen eine mittig offene Saatrille mit gelockerter Abdeckung verbleibt.

Das Verfahren wird vorteilhaft mit dem Waldsägerät gemäß einem der Ansprüche 1 bis 20 durchgeführt. Dem Verfahren kommen die mit der Anwendung des Waldsägeräts verbundenen Vorteile zu.

Nach dem Abdecken der Baumsamen verbleibt eine mittig offene Saatrille mit gelockerter Abdeckung. Hierdurch wird insbesondere der Zutritt von Feuchtigkeit zum Samen erleichtert.

Gemäß einer Ausgestaltung werden das Aufschneiden und Öffnen, Eingeben und Bedecken des Samens kontinuierlich durchgeführt. Hierdurch wird eine Aussaat großer Flächen in kurzen Zeiträumen begünstigt.

Gemäß einer weiteren Ausgestaltung weist die Saatrille eine Folge von Taschen auf. Hierdurch wird eine Aussaat mit besonders geringem Energieeinsatz und ohne Beschädigung des Bodens ermöglicht.

Gemäß einer weiteren Ausgestaltung sind die Taschen am Grund einer kontinuierlichen Saatrille gebildet oder ist die Saatrille insgesamt durch eine Folge von Taschen gebildet. Bei der ersten Variante ist eine kontinuierliche Saatrille vorhanden, die am Grund Taschen aufweist. Bei der zweiten Variante besteht die Saatrille ausschließlich aus eine Folge von Taschen. Beiden Varianten kommen die Vorteile der Taschenausbildung zu, wobei die zweite Variante besonders vorteilhaft ist.

Gemäß einer weiteren Ausgestaltung wird eine Saatrille mit etwa parallelen Begrenzungen zum Oberboden gebildet. Diese Ausprägung ist für die Einbringung mit geringem Energieeinsatz und die Keimung sowie die Entwicklung der Sämlinge besonders vorteilhaft.

Die nachfolgenden Angaben zu den Voraussetzungen für den zweckmäßigen Einsatz des Waldsägeräts und den Vorteilen des Einsatzes des Waldsägeräts sind grundsätzlicher Art und nicht auf spezielle Ausführungsformen beschränkt:
**Voraussetzungen für den zweckmäßigen Einsatz des Waldsägeräts**

### Anforderungen an den Arbeitsort

Bei der Auswahl der Saatflächen muss stets den ökologischen Ansprüchen der jeweiligen Baumart Rechnung getragen werden. Die vorgesehen Flächen sollen nach Geländeform, Bodentyp, Bodenvegetation und Bodengare für eine Waldsaat geeignet sein. Dabei kann das Waldsägerät im Bestand, aber auch auf Freiflächen (z.B. Eiche) Anwendung finden. Flachgründige, zur Verhagerung neigende Standorte, Blockböden, Steilhänge, stark vernässte Partien und sehr flach durchwurzelte Böden sind für die Maschinensaat nicht geeignet. Verjüngungsgruppen aus dem Altbestand können mit der Maschine umgangen und in das Verjüngungsprojekt integriert werden.

### Anforderungen an das Saatgut

Voraussetzung für das Gelingen der Waldsaaten ist die Verwendung von Samen hoher Qualität und Frische. In der Regel werden für die Frühjahrssaat die schwerfrüchtigen Samen einer gezielten Vorbehandlung unterzogen. Dadurch soll das rasche und möglichst gleichzeitige Auflaufen der Saat gesichert werden. Je weiter die Keimbereitschaft der Samen vorangeschritten ist, um so empfindlicher sind diese gegenüber Austrocknung und mechanischen Verletzungen (Druck, Quetschung). Eine Unterbrechung des angelaufenen Keimvorganges kann eine sekundäre Keimruhe oder gar den Verderb des Samens bewirken. Somit ist der Aussaatzeitpunkt eng an Saatgutvorbehandlungen und Witterung gebunden.

### Anforderungen an das Saatbett

Die Saatrille muss in der für die jeweilige Samengröße notwendigen Tiefe und Breite hergestellt werden. Wichtig ist, dass diese sofort nach der Saat wieder verschlossen wird. Die besäte Rille ist später nur noch an einem feinen Einschnitt im Oberboden zu sehen. Damit ist sichergestellt, dass das Bodengefüge kaum gestört wird. Struktur, Kapillarität und Edaphon (Bodenlebewesen) erleiden nur unmerkliche Veränderungen, die die Wasserzirkulation und den Lufthaushalt im Boden kaum beeinträchtigen. Dies ist Voraussetzung für die rasche und vollständige Quellung der Samen und ihr zügiges Auskeimen. Da keinerlei Bodenüberzug abgeräumt wird, besteht auch nicht die Gefahr der Behinderung nachfolgender Arbeiten.

### Vorteile, die sich aus dem Einsatz des Waldsägeräts ergeben

Mit dem neuen Waldsägerät kann die sehr naturnahe Methode der Waldsaat weitgehend mechanisiert werden. Die Herstellung der Saatrille sowie Einsaat und Abdeckung der Samen erfolgen in einem Arbeitsgang. Die mögliche Flächenleistung und die Verteilung der Sämlinge auf der Fläche sind weit besser als bei der gebräuchlichen Hand- oder Maschinenpflanzung. Durch die kaum merkliche Beeinflussung des Oberbodens ist die Maschine mit den Zertifizierungsnormen (PEFC) konform. Sie ermöglicht eine sehr flexible Reaktion auf Standortunterschiede und die Bodenvegetation, wobei der notwendige Energieinput sehr gering bleibt.

Von großem Vorteil sind die erzielbaren hohen Sämlingsstückzahlen pro Fläche, die gerade bei den genannten Laubbaumarten für das Erreichen einer guten Schaftqualität unabdingbar sind. Gleichermaßen wird damit der vorhandene Genpool möglichst vollständig in die neue Generation überführt, was zur bestmöglichen Ausnutzung der vorhandenen Standortpotentiale eine Grundvoraussetzung ist.

Die ungestörte Wurzelentwicklung am Saatort mit Ausbildung einer kräftigen, weit in die Tiefe reichenden Pfahlwurzel ist Garant für gutes Wachstum und eine höhere Stabilität dieser Bäume gegenüber diversen Schadeinflüssen.

Im Vergleich zu Pflanzungen bestehen erhebliche Vorteile bezüglich der Baumzahl (Selektionsreserve), Vitalität (ohne Wurzelbeschädigung, rasche Verbindung zum Bodenwasser, kein Pflanzschock) und der Qualität (ausreichender Dichtstand zur Astreinigung, hohe Schaftgüte) sowie den Anlagekosten. Durch das ungestörte Wachstum vor Ort und die Nichtverwendung von Düngemitteln ist die Disposition gegenüber Wildverbissschäden relativ gering.

Die erzielten Ergebnisse zeigen Analogien zum Wuchsverhalten bei der natürlichen Verjüngung dieser Baumarten.

Das Waldsägerät ist gut für den derzeitigen Waldumbau, aber auch für die Wiederaufforstung von Kahlflächen im Wald und sogar für die Erstaufforstung von Flächen außerhalb des Waldes einsetzbar. Auch Versuche zur Saat auf Kippenstandorten haben Erfolge gezeigt.

Die Erfindung wird nachfolgend anhand der anliegenden Zeichnungen eines Ausführungsbeispiels näher erläutert. In den Zeichnungen zeigen:
- Fig. 1: das Waldsägerät in einer Seitenansicht;
- Fig. 2: Geräteträger, Scheiben, Dosiereinheit und Vorrichtungen zum Ankuppeln desselben Waldsägeräts in einer Seitenansicht;
- Fig. 3: Geräteträger, Scheiben und Dosiereinheit desselben Waldsägeräts in einer Perspektivansicht schräg von oben und von der Seite;
- Fig. 4a-d: Dosiereinheit desselben Waldsägeräts in der Draufsicht (Fig. 4a), in einer Seitenansicht (Fig. 4b), in einer Unteransicht (Fig. 4c) und in einer Perspektivansicht schräg von oben und von der Seite (Fig. 4d);
- Fig. 5: die Scheiben des Waldsägeräts beim Erzeugen einer Saatrille in einer Perspektivansicht schräg von vorn und von der Seite;
- Fig. 6: die Saatrille nach dem Eingeben von Baumsamen und verkrümeltem Auflagehumus in einem Vertikalschnitt.

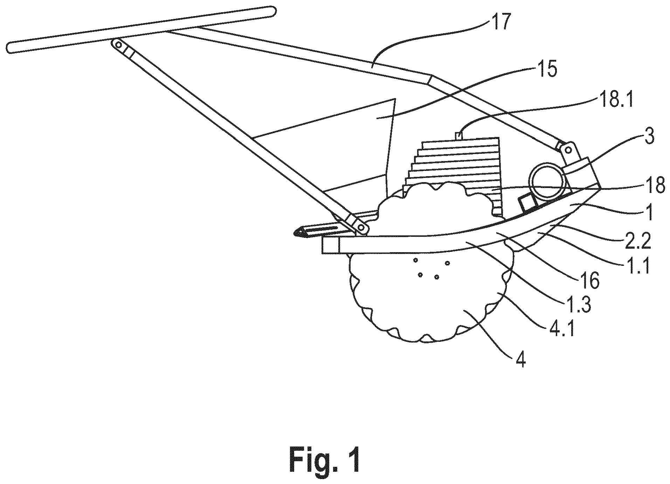

Gemäß Fig. 1 bis 3 weist das Waldsägerät einen Geräteträger 1 mit einem in der Draufsicht geradlinigen zentralen Geräteträger 1.1 auf. Der zentrale Geräteträger 1.1 ist auf der Gerätelängsachse 1.2 angeordnet und von einem massiven Vierkantstahl gebildet. Das vordere Ende des zentralen Geräteträgers 1.1 ist durch eine Abwinklung 2.1 bezüglich der Gerätelängsachse nach oben und eine Anschrägung 2.2 an der Unterseite zu einem Schiffsbug 2 ausgeformt. Ferner hat das vordere Ende an der Oberseite Vorrichtungen zum Ankuppeln einer Zugkraftquelle 3 in Form von Ösen 3.1, 3.2.

Im hinteren Drittel sind an den beiden Seiten des zentralen Geräteträgers Lagerbuchsen 5.1 angeschweißt. In den Lagerbuchsen 5.1 sind zwei Scheiben 4 mittels Lagerwellen 5.2 drehbar gelagert.

Die Scheiben 4 sind flach und am Umfang profiliert. Die Profilierung ist durch eine Folge trapezförmiger Zähne 4.1 gebildet. Jeder Zahn 4.1 hat eine Zahnkrone 4.2 und zwei Zahnflanken 4.3. zwischen jeweils zwei benachbarten Zähnen weist jede Scheibe 4, einen zahnfreien Bereich mit einer Ausrundung 4.4 auf.

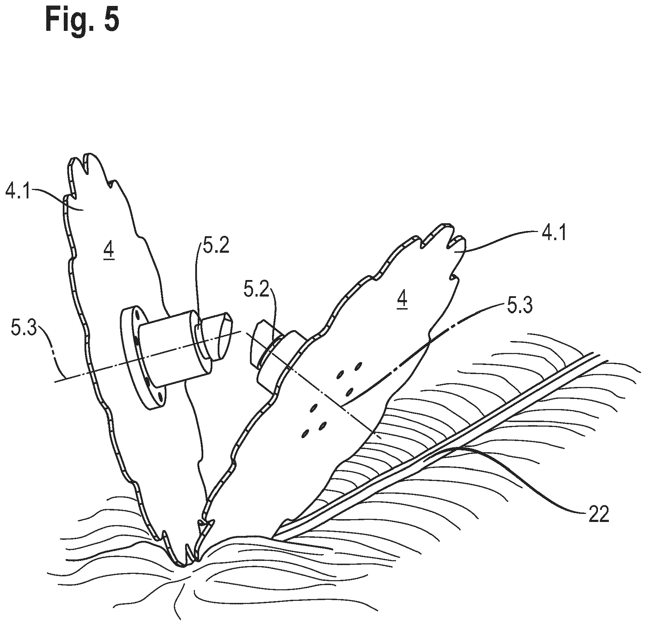

Die Buchsen 5.1 und Lagerwellen 5.2 bilden Drehlager 5 zum drehbaren Lagern der Scheiben 4 am zentralen Geräteträger 1.1. Die Drehlagerachsen 5.3 der Drehlager 5 sind spitzwinklig nach vorn bezüglich einer zur Gerätelängsachse senkrechten Horizontalen geneigt. Zudem sind die Drehlagerachsen 5.3 spitzwinklig zur Vertikalen geneigt (Fig. 5). Infolgedessen sind die beiden Scheiben 4 unterhalb der Drehlager 5 einander näher als oberhalb der Drehlager.

Am hinteren Ende ist auf der Oberseite des zentralen Geräteträgers 1.1 ein Adapter 6 fixiert. Der Adapter 6 ist ein C-Profil, das in vertikale Ausrichtung auf dem zentralen Geräteträger 1.1 angeordnet ist. Der Adapter 6 dient zur Befestigung einer Dosiereinheit 7.

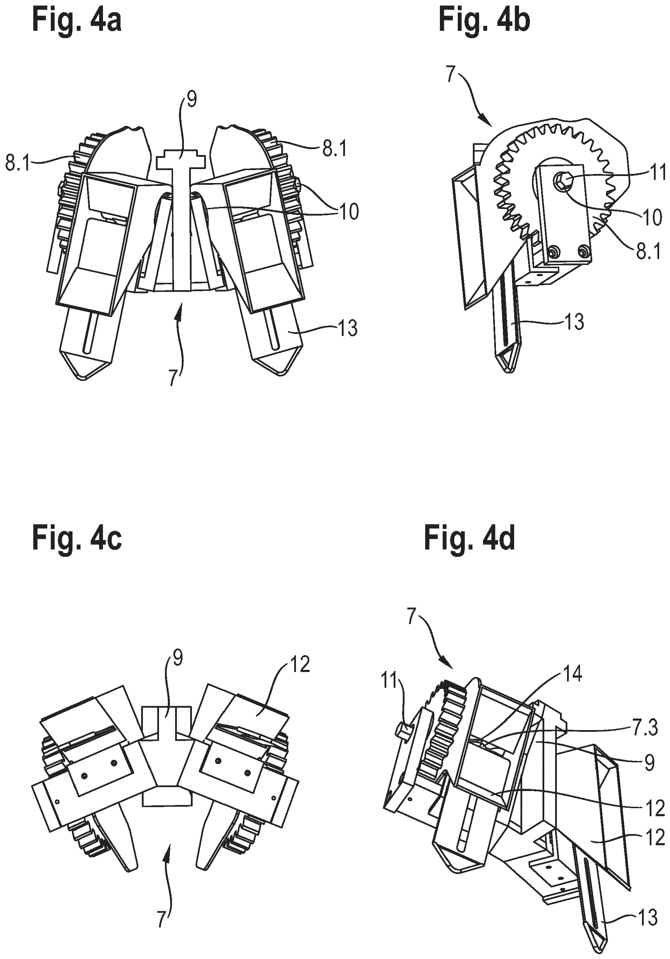

Gemäß Fig. 4 umfasst die Dosiereinheit 7 zwei Dosiervorrichtungen 7.1. Die Dosiervorrichtungen 7.1 weisen jeweils ein Dosiergehäuse 7.2 und ein drehbar im Dosiergehäuse gelagertes Zellenrad 7.3 auf. Das Zellenrad 7.3 ist ein Zahnrad oder ein mit Bürsten am Umfang versehenes Rad. Das Zellenrad 7.3 ist zwischen einem Einlauf 7.4 am oberen Ende des Dosiergehäuses 7.2 und einem Auslauf 7.5 am unteren Ende des Dosiergehäuses angeordnet.

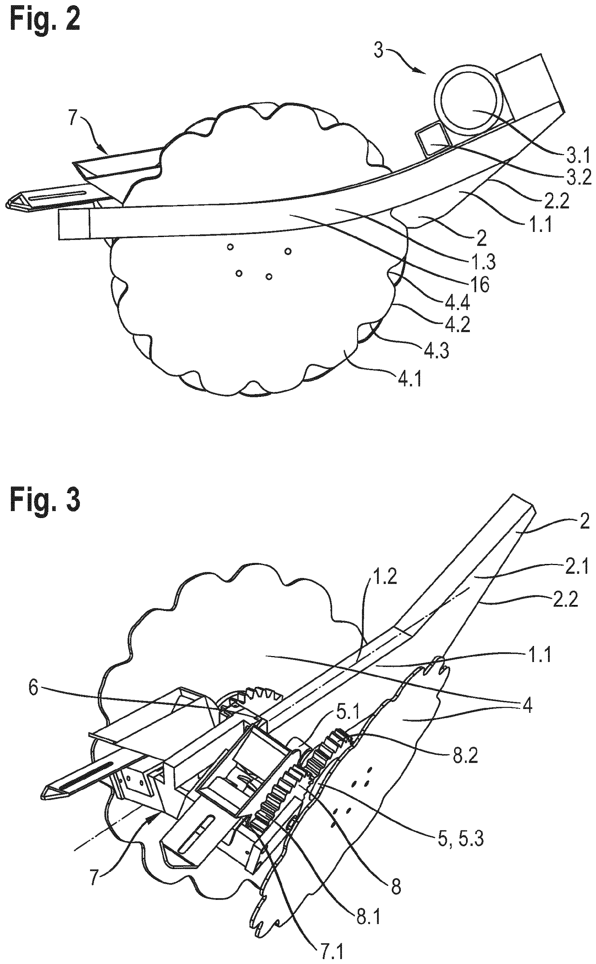

Gemäß Fig. 3 sind die Dosiervorrichtungen 7.1 sind über ein Zahnradgetriebe 8 mit den Scheiben 4 verbunden.

Die Dosiervorrichtungen 7.1 sind auf den beiden Seiten eines Adapterblockes 9 fixiert, der ein T-förmiges Profil hat. Der Adapterblock 9 ist mit dem T-Profil in das C-Profil des Adapters 6 einsetzbar.

Der Adapterblock 9 weist für jede Dosiervorrichtung 7.1 zwei Lager 10 auf, in denen jeweils eine mit dem Zellenrad 7.3 drehfest verbundene Welle 11 drehbar gelagert ist. Jede Welle 1 hat ein seitlich aus dem Dosiergehäuse 7.1 hervorstehendes Ende, auf dem ein Zahnrad 8.1 sitzt, das drehfest mit der Welle 11 verbunden ist. Ferner sitzt auf jeder Lagerwelle 5.2 ein Zahnrad 8.2, das drehfest mit der Lagerwelle verbunden ist. Wenn die Dosiereinheit 7 mittels des Adapterblocks 9 im Adapter 6 gehalten ist, greifen die Zahnräder 8.1, 8.2 ineinander ein und bilden das Getriebe 8. Das Getriebe 8 überträgt eine Drehbewegung der Scheiben 4 auf das Zellenrad 7.3.

Die Dosiervorrichtungen 7.1 haben jeweils am oberen Ende des Gehäuses Dosierkästen 12, in denen ein Mengenschieber 13 angeordnet ist. Je nach Stellung des Mengenschiebers 13 wird ein Dosierspalt 14 im Dosiergehäuse mehr oder weniger verschlossen. Der Dosierspalt 14 ist zwischen dem Einlass und dem Zellenrad 7.3 der Dosiervorrichtung 7.1 angeordnet.

Oberhalb der Dosiervorrichtungen ist ein Vorratsbehälter 15 für Saatgut am Geräteträger 1 befestigt. Der Vorratsbehälter 15 erweitert sich nach oben und ist über angepasste Aufsätze erweiterbar. Der Vorratsbehälter 15 hat unten Auslässe, die mit den Einlässen an den oberen Enden der Dosierkästen 12 verbunden sind.

Parallel zu dem zentralen Geräteträger 1.1 erstrecken sich außerhalb der Scheiben 4 seitliche Geräteträger 1.2, die als Schutzrahmen 16 dienen. Die seitlichen Geräteträger 1.2 sind vorn und hinten mit dem zentralen Geräteträger 1.1 verbunden.

Ferner ist das Waldsägerät mit einem Handlauf 17 und hinten mit einem bügelförmigen Griff 17.1 für die Manipulation des Geräts im Gelände versehen.

Zudem ist eine Halterung 18.1 für Zusatzgewichte 18 am Geräteträger 1 befestigt.

### Funktionsweise Forstsaataggregat

Das Waldsägerät wird mittels einer Kraftquelle in Richtung des vorderen Endes des Geräteträgers 1 über den Boden gezogen. Die optimale Zuggeschwindigkeit beträgt 3 bis 4 km/h.

Durch den Zug kommen die zwei Scheiben 4 in Bewegung und durch ihre Stellung zueinander, ihre Größe, Ausformung und Anschliff und ihr Eigengewicht in Verbindung mit dem Gesamtgewicht des Aggregates funktionieren diese dabei als Werkzeug.

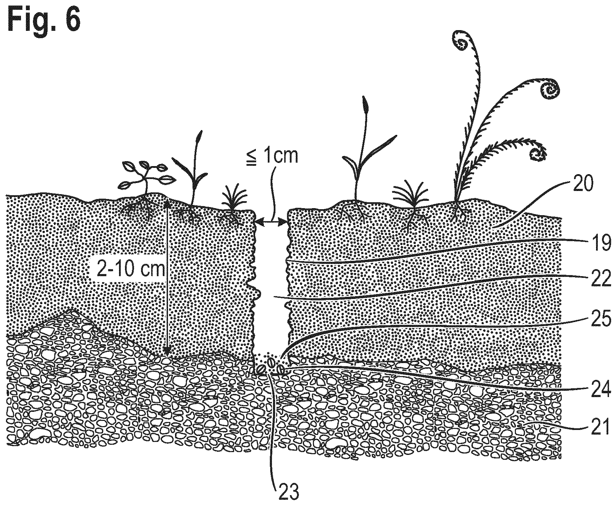

Gemäß Fig. 5 und 6 schneiden sie am Anschnittpunkt den Auflagehumus 19 mit Feindurchwurzelung aus der Kraut- und Moosschicht 20 ein.

Sie öffnen den Oberboden im Arbeitsbereich bis auf die Mineralbodenschicht 21 im Reißverschlußprinzip.

Gleichzeitig profilieren sie in die Mineralbodenschicht 21 Saattaschen.

In die so gebildete Saatrille 22 mit Taschen 23 legt das Dosiergerät 7.1 Baumsamen 24 ab.

Beim Schliessen der Saatrille 22 verkrümeln und bedecken die Scheiben 4 den abgelegten Samen 24 mit gelockertem Material aus dem Auflagehumus 19 und decken den abgelegten Samen vollständig ab, jedoch ohne die Saatrille 22 komplett zu verschliessen.

Es verbleibt eine mittig offene, abgedeckte Saatrille 22 mit strukturierter und gelockerter Abdeckung 25 als optimales Keimbett für den abgelgten Samen 24. Diese Saatrille 22 ermöglicht sowohl eine Keimung des Laubbaumsamens in einer biologisch fremden Bodenflora und begünstigt das Mechanische Aufrichten des Sämlings und versorgt den Sämling in der Startphase optimal mit Nährstoffen. Gleichzeitig verhindert die Saatrille 22 das Aus- oder Vertrocknen des Samens oder Sämlings durch direkte Sonneneinstrahlung und funktioniert als Sichtschutz gegenüber Fraßfeinden wie Vögeln oder Wild. Die Saatrille 22 schafft Windstille unmittelbar am Samen 24 und damit gleichmässigere Keimbedingungen.

Der Samen 24 liegt direkt auf der unbearbeiteten gewachsenen Mineralbodenschicht 21 in kleinen ausgeschälten Taschen 23. Die Kapillarität der Mineralbodenschicht 21 und damit die Wasserversorgung aus dem Boden bleibt voll erhalten. Gleichzeitig dringt durch den Verbleibenden Rillenspalt bei Niederschlag begünstigt Wasser bis zum Samen 24 oder Sämling vor.

Die Scheiben 4 erfüllen neben dem Zweck als Werkzeug kunstruktionsbedingt auch den Schutz des Agreggates vor Hinternissen und Störungen bei der Vorwärtsbewegung und bilden durch ihre Stellung und Anordnung einen geschützten Bauraum für die Dosiereinrichtungen 7.1.

Die Aufstandspunkte der beiden Scheiben sind parallel und nur 5 cm auseinander und bilden dabei die einzigen Kontaktpunkte des Aggregates mit dem Waldboden. Das minimiert Störungen durch das Waldbodenrelief und Hindernisse wie Wurzeln, Wurzelstöcke, Steine, Bodenwellen, Äste und Schlagabraum, Pflanzen und Unrat und ermöglicht 360 Grad Wendigkeit an jedem Punkt ohne die Funktionsfähigkeit einzuschränken (Direkte Abnahme der Drehbewegung in die Dosiereinrichtung). Gleichzeitig werden die Kippkräfte aus Bodenunebenheiten neutralisiert.

Durch die Bewegung der Sechscheiben entsteht eine Kraftübertragung auf die Zahnräder und die verbundene Welle in die Dosiereinheit. Der Samen wird in der Vorwärtsbewegung dosiert in die Saatrille abgelegt. Die Anordnung der Dosiermittel und dessen Auslasses mit wenig Abstand und senkrecht über der geöffneten Saatrille bedingt eine saubere störungsfreie Ablage des Samens auf der Mineralbodenschicht auch in unterschiedlichen Saatdichten. Seitliche Abweichungen oder Störungen aus dem Umfeld werden konstruktionsbedingt durch die kurzen Wege (der Auslass des Samens ist ca. 5cm über dem Boden) und die Anordnung im geschützten Bauraum hinter den Arbeitsmitteln und die Manipulation bei Kippkräften ausgeschaltet.

Durch dieses gleichmässige Arbeiten aller Funktionen und die Minimierung der Umfeldbedingten Störungen verrichtet das Aggregat die drei Arbeitsschritte der Saat kontinuierlich gleichmässig und es bedarf keiner Nacharbeiten durch nachlaufende Zusatzgeräte zum Verschliessen des Bodens.

### Zusammenfassung grundsätzlicher Eigenschaften und Vorteile des Waldsägeräts

Zwei horizontal und vertikal geneigte, winkelig zueinander angeordnete Scheibenseche werden von einer Zugkraftquelle rollend über den Waldboden gezogen.

Der gemeinsame Berührungs- und gleichzeitige Anschnittpunkt des Bodens liegt in Zugrichtung vor und über der Aufstandsebene der Scheibenseche. Die gezahnten Ränder der Seche laufen dabei versetzt zueinander.

Die Drehbewegung der Seche entsteht aus dem Zug und dem Andruck des Aggregates auf den Waldboden und wird über Zahnräder direkt zur Dosiereinheit und in den Vorratsbehälter für Baumsamen übertragen.

Der Samen wird mittels mindestens einer Dosiervorrichtung (verschieden Ausführungen für die Samenarten) aus dem Vorratsbehälter direkt in den geöffneten Bodenspalt befördert und abgelegt. Durch die Anordnung der Dosiereinheit direkt über dem geöffneten Bodenspalt wird konstruktionsbedingt der kürzeste Weg zur Ablage gewählt. Alle Störungen durch Erschütterungen etc. werden minimiert.

Die Zackung der Seche und deren Stellung zueinander und deren Rollbewegung im Zug bedingen nacheinander das Einschneiden, Verdrängen und unmittelbare Schliessen des Oberbodens. Dabei dringen die Aufstandspunkte der Seche in der mittels Gewichten eingestellten Tiefe bis auf den gewachsenen Mineralboden ein, öffnen die Rille kurzzeitig ca. 5cm in der Breite und ca. 10 cm in der Länge und profilieren den Boden in der Saatrille in Liegeplätze. So wie die Rollbewegung vorne ein Einschneiden bewirkt bedeckt sie am Ende des Spaltes die abgelegten Samen mit gelockertem Oberbodenmaterial.

Das Waldsägerät ist ein Werkzeug mit drei gleichzeitig ausführenden Funktionen auf ca. 10 cm Rillenlänge. Die exakte Anordnung der Scheibenseche und der Maschinenwinkel ersetzt alle aufwendigen Zusatzgeräte und Energiequellen und minimiert Störungen und Größe und Gerätegewicht. Dabei entstehen beim rollenden Überfahren des Waldbodens bedingt durch die Profilierung der Seche zueinander versetzte Vertiefungen (Taschen) in der Mineralbodenschicht als separate Liegeplätze für die Samen.

Das Gerät arbeitet ausschließlich in der Oberbodenschicht und auf der anstehenden gewachsen Mineralbodenschicht ohne die Bodenhorizonte zu durchmischen oder deren Kapillarität zu stören.

Sowohl Oberboden als auch Mineralbodenschicht werden nicht verändert oder vermischt. Die Rille schließt sich in der Rollbewegung unmittelbar über dem abgelegten Samen und bedeckt diesen in der gewünschten Tiefe. Der Schutz des Samens vor Austrocknung, Sichtschutz vor Fraßfeinden insbesondere Vögeln und Windschutz sind gegeben. Es verbleibt ein Anschnittspalt im Oberboden welcher das mechanische Aufrichten des Sämlings erleichtert.

## Patentansprüche

1. Waldsägerät zur Aussaat schwerfrüchtiger Laubbaumarten mit
• einem Geräteträger (1),
• ersten Drehlagerelementen (5.1) am Geräteträger (1) auf beiden Seiten einer Gerätelängsachse (1.2),
• zwei Scheiben (4), die jeweils ein zentrales zweites Drehlagerelement (5.2) aufweisen, das an einem der ersten Drehlagerelemente (5.1) gelagert ist, wobei die beiden Scheiben auf verschiedenen Seiten der Gerätelängsachse angeordnet sind,
• wobei die Drehlagerachsen (5.3) der ersten Drehlagerelemente (5.1) jeweils spitzwinklig nach vorn bezüglich einer zur Gerätelängsachse (1.2) senkrechten Horizontalen geneigt sind und spitzwinklig zur Vertikalen geneigt sind, sodass die beiden Scheiben (4) unterhalb der ersten Drehlagerelemente (5.1) einander näher sind als oberhalb der ersten Drehlagerelemente (5.1),
• wobei der Geräteträger einen zentralen Geräteträger (1.1) aufweist, der zwischen den Scheiben auf der Längsachse (1.2) angeordnet ist, und die Drehlagerelemente (5.1) des Geräteträgers (1) auf beiden Seiten des zentralen Geräteträgers angeordnet sind,
• mindestens einer Dosiervorrichtung (7.1) für Baumsamen am Geräteträger (1), **dadurch gekennzeichnet, dass**
- das Gerät ausgelegt ist, sich nur über die Scheiben (4) am Boden abzustützen,
- die Scheiben (4) am Umfang gezahnt sind, und
- eine Dosieröffnung der Dosiervorrichtung (7.1) zwischen den beiden Scheiben (4) angeordnet ist.

2. Waldsägerät nach Anspruch 1, bei dem der Geräteträger (1) vorn an der Unterseite eine Anschrägung (2.1) aufweist, sodass im Bereich der Anschrägung der Abstand seiner Unterkante vom Boden nach vorn zunimmt und/oder bei der der Geräteträger vorn eine Abwinklung (2.2) nach oben aufweist, sodass im Bereich der Abwinklung der Abstand seiner Unterkante vom Boden nach vorn zunimmt.

3. Waldsägerät nach Anspruch 1 oder 2, bei dem die Scheiben (4) am Umfang geschliffen sind.

4. Waldsägerät nach einem der Ansprüche 1 bis 3, bei dem der spitze Winkel zwischen jeder Drehlagerachse (5.3) und der Horizontalen 5° bis 40° beträgt, vorzugsweise 10° bis 20°, weiterhin vorzugsweise etwa 15° und/oder bei dem der spitze Winkel zwischen jeder Drehlagerachse (5.3) und der Vertikalen 10° bis 50° beträgt, vorzugsweise 20° bis 30°, weiterhin vorzugsweise etwa 24°.

5. Waldsägerät nach einem der Ansprüche 1 bis 4, bei dem die Aufstandspunkte der beiden Scheiben (4) auf dem Boden einen Abstand von 2 bis 10 cm voneinander haben, vorzugsweise von 4 bis 7 cm, weiterhin vorzugsweise von etwa 5 cm.

6. Waldsägerät nach einem der Ansprüche 1 bis 5, bei dem die Scheiben (4) jeweils einen Durchmesser von 30 bis 80 cm aufweisen, vorzugsweise von 40 bis 65 cm, weiterhin vorzugsweise von etwa 50 cm.

7. Waldsägerät nach einem der Ansprüche 1 bis 6, bei dem die Scheiben (4) am Umfang Zähne (4.1) mit jeweils einem trapezförmigen Profil in der Ebene der Scheibe aufweisen und/oder die Scheiben am Umfang zwischen jeweils zwei benachbarten Zähnen (4.1) zahnfreie Bereiche mit einer Ausrundung (4.4) aufweisen.

8. Waldsägerät nach einem der Ansprüche 1 bis 7, bei dem die Scheiben am Umfang Zähne (4.1) mit jeweils einer Breite der Zahnkrone (4.2) von 2 bis 8 cm, vorzugsweise von 4 bis 6 cm, weiterhin vorzugsweise von 5 cm und einer Breite an der Basis von 4 bis 10 cm, vorzugsweise von 6 bis 8 cm, weiterhin vorzugsweise von etwa 7 cm aufweisen und/oder zahnfreie Bereiche mit einer Breite von 0,25 bis 4 cm, vorzugsweise von 0,5 cm bis 2 cm, weiterhin vorzugsweise von 1 cm aufweisen.

9. Waldsägerät nach einem der Ansprüche 1 bis 8, bei dem die Scheiben am Umfang Zähne (4.1) mit einer Höhe von 1 bis 6 cm, vorzugsweise von 2 bis 4 cm, weiterhin vorzugsweise von 3 cm aufweisen.

10. Waldsägerät nach einem der Ansprüche 1 bis 9 mit mindestens einer Vorrichtung zum Ankuppeln (3) einer Zugkraftquelle vorn am Geräteträger (1).

11. Waldsägerät nach einem der Ansprüche 1 bis 10, bei dem die Dosiervorrichtung (7.1) ganz oder teilweise in einen Bauraum zwischen den beiden Scheiben (4) angeordnet ist.

12. Waldsägerät nach einem der Ansprüche 1 bis 11, bei dem die Dosiervorrichtung (7.1) mindestens eine Zellenradschleuse umfasst, die ein Zellenrad (7.3) in einem Dosiergehäuse (7.2) aufweist und deren Zellenrad mit Antriebsmitteln (8) verbunden ist, die in der Lage sind, das Zellenrad im Dosiergehäuse zu drehen.

13. Waldsägerät nach Anspruch 12, bei dem die Antriebsmittel (8) ein Getriebe sind, das eine Drehbewegung einer Scheibe (4) auf eine Drehbewegung des Zellenrads (7.3) überträgt.

14. Waldsägerät nach einem der Ansprüche 1 bis 13, bei dem am Geräteträger (1) ein Adapter (6) zum lösbaren Halten mindestens einer Dosiervorrichtung (7.1) angeordnet ist und die Dosiervorrichtung mit einem komplementären Adapterblock (9) an dem Adapter lösbar gehalten ist.

15. Waldsägerät nach einem der Ansprüche 1 bis 14, bei dem die Dosiervorrichtung (7.1) Mittel zum Einstellen (13) der Dosiermenge aufweist.

16. Waldsägerät nach einem der Ansprüche 1 bis 15 mit einem Vorratsbehälter (15) für Baumsamen am Geräteträger (1), der unten einen Auslauf hat, der mit einem Einlauf der Dosiervorrichtung (7.1) verbunden ist.

17. Waldsägerät nach einem der Ansprüche 1 bis 16, das Steuermittel (17) am Geräteträger (1) zum Manipulieren des Gerätes im Gelände aufweist.

18. Waldsägerät nach einem der Ansprüche 1 bis 17, bei dem der Geräteträger (1) einen Schutzrahmen (16) aufweist, der zwei außerhalb der Scheiben verlaufende seitliche Geräteträger (1.2) hat.

19. Waldsägerät nach einem der Ansprüche 1 bis 18, das am Geräteträger (1) Mittel zum Halten (18.1) mindestens eines Zusatzgewichtes (18) aufweist.

20. Waldsägerät nach einem der Ansprüche 1 bis 19, das mehrere Anordnungen mit je zwei gezahnten Scheiben (4) aufweist.

21. Verfahren zum Aussäen schwerfrüchtiger Laubbaumarten, bei dem
- durch Einschneiden in den Auflagehumus und Öffnen des Oberbodens im Oberboden eine bis zur Mineralbodenschicht reichende Saatrille gebildet wird,
- in die Saatrille Baumsamen schwerfrüchtiger Laubbaumarten hineingegeben werden,
**dadurch gekennzeichnet, dass**
- die Baumsamen in der Saatrille mit gelockertem Material aus dem Auflagehumus abgedeckt werden"
- nach dem Abdecken der Baumsamen eine mittig offene Saatrille mit gelockerter Abdeckung verbleibt.

22. Verfahren nach Anspruch 21, bei dem das Aufschneiden und Öffnen, Eingeben und Bedecken des Samens kontinuierlich durchgeführt werden.

23. Verfahren nach einem der Ansprüche 21 bis 22, bei dem die Saatrille eine Folge von Taschen aufweist.

24. Verfahren nach einem der Ansprüche 21 bis 23, bei dem eine Saatrille mit einer Breite von maximal 2 cm, vorzugsweise von maximal 1 cm gebildet wird.

## Claims

1. A forest sowing device for sowing deciduous trees with heavy fruit with
• a device carrier (1),
• first rotary bearing elements (5.1) on the device carrier (1) on both sides of a longitudinal axis (1.2) of the device,
• two disks (4), each of which has a central second rotary bearing element (5.2), which is mounted on one of the first rotary bearing elements (5.1), wherein the two disks are arranged on different sides of the longitudinal axis of the device,
• wherein the rotary bearing axes (5.3) of the first rotary bearing elements (5.1) are respectively tilted at an acute angle forwards with respect to a horizontal perpendicular to the longitudinal axis (1.2) of the device and are tilted at an acute angle to the vertical so that the two disks (4) below the first rotary bearing elements (5.1) are closer to each other than above the first rotary bearing elements (5.1),
• wherein the device carrier has a central device carrier (1.1), which is arranged between the disks on the longitudinal axis (1.2), and the rotary bearing elements (5.1) of the device carrier (1) are arranged on both sides of the central device carrier,
• at least one dosing apparatus (7.1) for tree seeds on the device carrier (1), **characterized in that**
- the device is designed to only be supported via the disks (4) on the ground,
- the disks (4) are serrated on the perimeter and
- a dosing opening of the dosing apparatus (7.1) is arranged between the two disks (4).

2. The forest sowing device according to claim 1, in which the device carrier (1) on the front on the bottom side has a beveling (2.1), so that in the area of the beveling the distance from its bottom edge to the ground increases towards the front and/or in which the device carrier on the front has an angular offset (2.2) upwards so that, in the area of the angular offset, the distance from its bottom edge to the ground increases towards the front.

3. The forest sowing device according to claim 1 or 2, in which the disks (4) are polished on the perimeter.

4. The forest sowing device according to one of claims 1 to 3, in which the acute angle between each rotary bearing axis (5.3) and the horizontal is 5° to 40°, preferably 10° to 20°, furthermore preferably approximately 15° and/or in which the acute angle between each rotary bearing axis (5.3) and the vertical is 10° to 50°, preferably 20° to 30°, furthermore preferably approximately 24°.

5. The forest sowing device according to one of claims 1 to 4, in which the contact points of the two disks (4) on the ground have a distance of 2 to 10 cm from each other, preferably 4 to 7 cm, furthermore preferably approximately 5 cm.

6. The forest sowing device according to one of claims 1 to 5, in which the disks (4) each have a diameter of 30 to 80 cm, preferably of 40 to 65 cm, furthermore preferably of approximately 50 cm.

7. The forest sowing device according to one of claims 1 to 6, in which the disks (4) on the perimeter have teeth (4.1) each with a trapezoidal profile in the plane of the disk and/or the disks on the perimeter have teeth-free areas with a rounding (4.4) between respectively two neighboring teeth (4.1).

8. The forest sowing device according to one of claims 1 to 7, in which the disks on the perimeter have teeth (4.1) with respectively a width of the tooth crown (4.2) of 2 to 8 cm, preferably of 4 to 6 cm, furthermore preferably of 5 cm and a width on the basis of 4 to 10 cm, preferably of 6 to 8 cm, furthermore preferably of approximately 7 cm and/or teeth-free areas with a width of 0.25 to 4 cm, preferably of 0.5 cm, furthermore preferably of 1 cm.

9. The forest sowing device according to one of claims 1 to 8, in which the disks on the perimeter have teeth (4.1) with a height of 1 to 6 cm, preferably of 2 to 4 cm, furthermore preferably of 3 cm.

10. The forest sowing device according to one of claims 1 to 9 with at least one apparatus for coupling (3) a tractive power source on the front on the device carrier (1).

11. The forest sowing device according to one of claims 1 to 10, in which the dosing apparatus (7.1) is arranged entirely or partially in an installation space between the two disks (4).

12. The forest sowing device according to one of claims 1 to 11, in which the dosing apparatus (7.1) comprises at least one rotary valve feeder, which has a rotary valve rotor (7.3) in a dosing housing (7.2) and the rotary valve rotor of which is connected with drive means (8), which are able to turn the rotary valve rotor in the dosing housing.

13. The forest sowing device according to claim 12, in which the drive means (8) is a gearbox, which transmits a rotary movement of a disk (4) to a rotary movement of the rotary valve rotor (7.3).

14. The forest sowing device according one of claims 1 to 13, in which an adapter (6) for releasably holding at least one dosing apparatus (7.1) is arranged on the device carrier (1) and the dosing apparatus with a complementary adapter block (9) is releasably held on the adapter.

15. The forest sowing device according to one of claims 1 to 14, in which the dosing apparatus (7.1) has means for adjusting (13) the dosage quantity.

16. The forest sowing device according to one of claims 1 to 15 with a reservoir (15) for tree seeds on the device carrier (1), which has an outlet on the bottom, which is connected with an inlet of the dosing apparatus (7.1).

17. The forest sowing device according to one of claims 1 to 16, which has control means (17) on the device carrier (1) for manipulating the device in the field.

18. The forest sowing device according to one of claims 1 to 17, in which the device carrier (1) has a protective frame (16), which has two device carriers (1.2) progressing laterally outside the disks.

19. The forest sowing device according to one of claims 1 to 18, which has means for holding (18.1) at least one additional weight (18) on the device carrier (1).

20. The forest sowing device according to one of claims 1 to 19, which has several arrangements each with two serrated disks (4).

21. A method for sowing deciduous trees with heavy fruit, in which
- a seed furrow reaching down to the mineral soil layer is formed in the top soil by cutting into the raw humus and opening the top soil,
- tree seeds of deciduous trees with heavy fruit are added to the seed furrow, **characterized in that**
- the tree seeds in the seed furrow are covered with loosened material from the raw humus,
- after the covering of the tree seeds, a seed furrow open in the center with a loosened covering remains.

22. The method according to claim 21, in which the cutting-open and opening, adding and covering of the seed are performed continuously.

23. The method according to one of claims 21 to 22, in which the seed furrow has a series of pockets.

24. The method according to one of claims 21 to 23, in which a seed furrow with a width of a maximum of 2 cm, preferably a maximum of 1 cm, is formed.

## Revendications

1. Semoir forestier pour le semis de feuillus à fruits lourds, avec
• un support d'appareil (1),
• des premiers éléments de palier rotatif (5.1) sur le support d'appareil (1) sur les deux côtés d'un axe longitudinal d'appareil (1.2),
• deux disques (4) qui présentent respectivement un deuxième élément de palier rotatif (5.2) central qui est supporté sur l'un des premiers éléments de palier rotatif (5.1), les deux disques étant disposés sur différents côtés de l'axe longitudinal d'appareil,
• les axes de palier rotatif (5.3) des premiers éléments de palier rotatif (5.1) étant inclinés respectivement en formant un angle aigu vers l'avant par rapport à une horizontale perpendiculaire à l'axe longitudinal d'appareil (1.2) et sont inclinés en formant un angle aigu par rapport à la verticale de telle sorte que les deux disques (4) au-dessous des premiers éléments de palier rotatif (5.1) sont plus proches l'un de l'autre qu'au-dessus des premiers éléments de palier rotatif (5.1),
• le support d'appareil présentant un support d'appareil central (1.1) qui est disposé entre les disques sur l'axe longitudinal (1.2), et les éléments de palier rotatif (5.1) du support d'appareil (1) étant disposés sur les deux côtés du support d'appareil central,
• au moins un dispositif de dosage (7.1) pour des semences d'arbres sur le support d'appareil (1),
**caractérisé en ce que**
- l'appareil est conçu pour s'appuyer sur le sol uniquement par le biais des disques (4),
- les disques (4) sont dentés sur la circonférence, et
- un orifice de dosage du dispositif de dosage (7.1) est disposé entre les deux disques (4).

2. Semoir forestier selon la revendication 1, dans lequel le support d'appareil (1) présente à l'avant sur le côté inférieur un chanfrein (2.1) de telle sorte que, dans la zone du chanfrein, la distance de son arête inférieure au sol augmente vers l'avant et/ou dans lequel le support d'appareil à l'avant présente un coude (2.2) vers le haut de telle sorte que, dans la zone du coude, la distance de son arête inférieure au sol augmente vers l'avant.

3. Semoir forestier selon la revendication 1 ou 2, dans lequel les disques (4) sont polis sur la circonférence.

4. Semoir forestier selon l'une des revendications 1 à 3, dans lequel l'angle aigu entre chaque axe de palier rotatif (5.3) et l'horizontale est compris entre 5° et 40°, de préférence entre 10° et 20°, encore de préférence est égal à environ 15° et/ou dans lequel l'angle aigu entre chaque axe de palier rotatif (5.3) et la verticale est compris entre 10° et 50°, de préférence entre 20° et 30°, encore de préférence est égal à environ 24°.

5. Semoir forestier selon l'une des revendications 1 à 4, dans lequel les points de contact des deux disques (4) sur le sol sont séparés par une distance de 2 à 10 cm, de préférence de 4 à 7 cm, encore de préférence d'environ 5 cm.

6. Semoir forestier selon l'une des revendications 1 à 5, dans lequel les disques (4) présentent respectivement un diamètre de 30 à 80 cm, de préférence de 40 à 65 cm, encore de préférence d'environ 50 cm.

7. Semoir forestier selon l'une des revendications 1 à 6, dans lequel les disques (4) présentent sur la circonférence des dents (4.1) avec respectivement un profil trapézoïdal dans le plan du disque et/ou les disques présentent sur la circonférence entre respectivement deux dents (4.1) voisines des zones exemptes de dents avec un arrondi (4.4).

8. Semoir forestier selon l'une des revendications 1 à 7, dans lequel les disques présentent sur la circonférence des dents (4.1) avec respectivement une largeur de la couronne dentaire (4.2) de 2 à 8 cm, de préférence de 4 à 6 cm, encore de préférence de 5 cm et avec une largeur à la base de 4 à 10 cm, de préférence de 6 à 8 cm, encore de préférence d'environ 7 cm et/ou des zones exemptes de dents avec une largeur de 0,25 à 4 cm, de préférence de 0,5 à 2 cm, encore de préférence de 1 cm.

9. Semoir forestier selon l'une des revendications 1 à 8, dans lequel les disques présentent sur la circonférence des dents (4.1) avec une hauteur de 1 à 6 cm, de préférence de 2 à 4 cm, encore de préférence de 3 cm.

10. Semoir forestier selon l'une des revendications 1 à 9, avec au moins un dispositif pour l'accouplement (3) d'une source de force de traction à l'avant sur le support d'appareil (1).

11. Semoir forestier selon l'une des revendications 1 à 10, dans lequel le dispositif de dosage (7.1) est disposé totalement ou partiellement dans un espace de construction entre les deux disques (4).

12. Semoir forestier selon l'une des revendications 1 à 11, dans lequel le dispositif de dosage (7.1) comprend au moins une vanne à roue cellulaire qui présente une roue cellulaire (7.3) dans un boîtier de dosage (7.2) et dont la roue cellulaire est raccordée à des moyens d'entraînement (8) qui sont en mesure de faire tourner la roue cellulaire dans le boîtier de dosage.

13. Semoir forestier selon la revendication 12, dans lequel les moyens d'entraînement (8) sont un engrenage qui transmet un mouvement de rotation d'un disque (4) à un mouvement de rotation de la roue cellulaire (7.3).

14. Semoir forestier selon l'une des revendications 1 à 13, dans lequel un adaptateur (6) est disposé sur le support d'appareil (1) pour la retenue détachable d'au moins un dispositif de dosage (7.1), et le dispositif de dosage est retenu de façon détachable sur l'adaptateur avec un bloc adaptateur (9) complémentaire.

15. Semoir forestier selon l'une des revendications 1 à 14, dans lequel le dispositif de dosage (7.1) présente des moyens pour le réglage (13) de la quantité de dosage.

16. Semoir forestier selon l'une des revendications 1 à 15, avec un réservoir (15) pour des semences d'arbres sur le support d'appareil (1) qui possède en bas une sortie qui est raccordée à une entrée du dispositif de dosage (7.1).

17. Semoir forestier selon l'une des revendications 1 à 16, qui présente des moyens de commande (17) sur le support d'appareil (1) pour la manipulation de l'appareil sur le terrain.

18. Semoir forestier selon l'une des revendications 1 à 17, dans lequel le support d'appareil (1) présente un cadre de protection (16) qui a deux supports d'appareil (1.2) latéraux à l'extérieur des disques.

19. Semoir forestier selon l'une des revendications 1 à 18, qui présente sur le support d'appareil (1) des moyens pour la retenue (18.1) d'au moins un poids supplémentaire (18).

20. Semoir forestier selon l'une des revendications 1 à 19, qui présente plusieurs dispositifs, chacun avec deux disques (4) dentés.

21. Procédé pour semer des feuillus à fruits lourds, dans lequel
- un sillon de semis atteignant la couche de sol minéral est formé par une découpe dans l'humus brut en voie de décomposition et par une ouverture de la couche arable dans la couche arable,
- des semences d'arbres de feuillus à fruits lourds sont mises en place dans le sillon de semis,
**caractérisé en ce que**
- les semences d'arbres dans le sillon de semis sont recouvertes par un matériau ameubli en provenance de l'humus brut en voie de décomposition,
- après le recouvrement des semences d'arbres, il demeure un sillon de semis ouvert au milieu avec le recouvrement ameubli.

22. Procédé selon la revendication 21, dans lequel la découpe et l'ouverture, la mise en place et la couverture du semis sont effectuées en continu.

23. Procédé selon l'une des revendications 21 à 22, dans lequel le sillon de semis présente une succession de poches.

24. Procédé selon l'une des revendications 21 à 23, dans lequel le sillon de semis est formé avec une largeur de 2 cm maximum, de préférence de 1 cm maximum.
